Europäisches Patentamt

European Patent Office

Office européen des brevets

(19)

(11) Publication number: **0 459 157 A2**

# EUROPEAN PATENT APPLICATION

(21) Application number: **91106855.9**

(51) Int. Cl.⁵: **G11B 27/10**

(22) Date of filing: **26.04.91**

(30) Priority: **28.04.90 JP 114474/90**

(43) Date of publication of application:
**04.12.91 Bulletin 91/49**

(84) Designated Contracting States:
**DE GB NL**

(71) Applicant: **NEC CORPORATION**
**7-1, Shiba 5-chome Minato-ku**
**Tokyo 108-01(JP)**

Applicant: **NEC HOME ELECTRONICS, LTD.**

**4-24, Shiromi 1-chome, Chuo-ku**
**Osaka-Shi Osaka(JP)**

(72) Inventor: **Hashitsume, Kimitoshi**
**NEC Home Electronics, Ltd., 4-24, Shiromi**
**1-chome**
**Chuo-ku, Osaka(JP)**

(74) Representative: **Vossius & Partner**
**Siebertstrasse 4 P.O. Box 86 07 67**
**W-8000 München 86(DE)**

(54) **Method and apparatus for playing back a recording medium automatically.**

(57) A method and an apparatus for playing back a CD-ROM or similar recording medium automatically to read and reproduce only particular one of a number of media data such as picture, voice and music or, alternatively, only a particular sequence of media data in a predetermined sequence.

## Fig. 1

## BACKGROUND OF THE INVENTION

The present invention relates to a method and an apparatus for playing back a CD-ROM or similar recording medium automatically to read and reproduce only particular one of a number of media data such as picture, voice and music or, alternatively, only a particular sequence of media data in a predetermined sequence.

A compact disk read-only memory (CD-ROM) is an optical storing medium capable of storing more than 500 megabytes of data and, therefore, not only characters but also voice and picture. Recent attempts have enabled an electronic musical instrument playing music automatically in response to musical instrument digital interface (MIDI) data stored in a CD-ROM Packing a CO-ROM with a great number of media data as stated above makes it possible to, for example, present a new product or to give practical training by voice while projecting a picture and playing background music. Presentation of a new product, for example, should preferably be done in the native language, e. g., in Japanese in Japan or in English, German or any other language outside of Japan. The simplest way to meet such a need will be producing CD-ROMS each being oriented to a particular language such as Japanese, English or German. However, it is more desirable from the cost standpoint to pack a single CD-ROM with commentaries in multiple languages and to select one of them at the time of playback, considering the huge capacity of a CD-ROM. A conventional CD-ROM playback system is troublesome to deal with since a sequence for selecting suitable one of such multiple languages and reproducing it in combination with media data associated therewith (picture, music, etc. ) has to be entered on each player at the spot.

## SUMMARY OF THE INVENTION

It is therefore an object of the present invention to provide a method and an apparatus which readily reproduce, among media data stored in a CD-ROM or similar recording medium in different languages, only particular media data in a desired language.

It is another object of the present invention to provide a method and an apparatus for reproducing a sequence of media data in one of a plurality of sequences automatically as soon as a CD-ROM or similar recording medium is loaded on a player and a playback switch is turned on.

It is another object of the present invention to provide a method and an apparatus for reading only desired audio data or, alternatively, a sequence of audio data or music data in a playback sequence selected beforehand automatically when a CD-ROM or similar optical storing medium is loaded on a MIDI player and a playback switch is turned on.

In one aspect of the present invention, a method of reading a string of media data out of a recording medium storing media data by a player in a predetermined playback sequence and reproducing the string of media data automatically comprises the steps of recording a plurality of playback sequences in the recording medium, setting a code identifying particular one of the playback sequences on the player, and reading the particular playback sequence out of the recording medium and sequentially reading a string of media data out of the recording medium according to the particular playback sequence and reproducing the string of media data.

In another aspect of the present invention, an apparatus for reading out of a recording medium storing media information and a plurality of playback sequences a string of media data in a predetermined playback sequence and reproducing the string of media data automatically comprises a code setting section for setting a code identifying a particular playback sequence on the apparatus, and a playback control section for reading the particular playback sequence out of the storing medium and sequentially reading a string of media data out of the storing medium and reproducing the string of media data in the particular playback sequence.

In still another aspect of the present invention, a method of playing back automatically an optical storing medium storing a plurality of audio data each corresponding to a particular language, music data for controlling an electronic musical instrument which produces musical notes, and data representative of a plurality of playback sequences for reproducing the data comprises the steps of inputting a code designating data representative of the audio data or one of the playback sequences on a MIDI player for playing bach the optical storing medium, and causing the MIDI player to play back the optical storing medium by using the data representative of the audio data or the playback sequence corresponding the code.

In a further aspect of the present invention, an apparatus for playing back an optical storing medium storing a plurality of audio data each corresponding to a particular language, music data for controlling electronic equipment which produces musical notes, and data representative of a plurality of playback sequences for reproducing the data, and causing the electronic equipment to play music automatically comprises a designating section for designating data representative of the plurality of audio data or the plurality of playback sequences, and a reproducing section for reproducing, on the basis of the data designated by the designating section, given audio data or at least the audio data and music data in a given playback sequence out of the optical recording section.

BRIEF DESCRIPTION OF THE DRAWINGS

The above and other objects, features and advantages of the present invention will become more apparent from the following detailed description taken with the accompanying drawings in which:

Fig. 1 is a block diagram schematically showing essential part of a CD-ROM player embodying the present invention;

Fig. 2 is a flowchart demonstrating a specific playback control procedure to be executed by a control section included in the embodiment;

Fig. 3 shows a hierarchical structure of a CD-ROM playback system particular to the embodiment;

Fig. 4 shows a recording format of a route directory of a volume file layer included in the hierarchical structure;

Fig. 5 shows specific playback sequences described in a sequence file of a CD-ROM in the embodiment; and

Fig. 6 is a view showing a specific arrangement of an automatic playback system implemented with the CD-ROM player of the embodiment.

DESCRIPTION OF THE PREFERRED EMBODIMENT

A method and an apparatus for playing back a recording medium automatically embodying the present invention will be described.

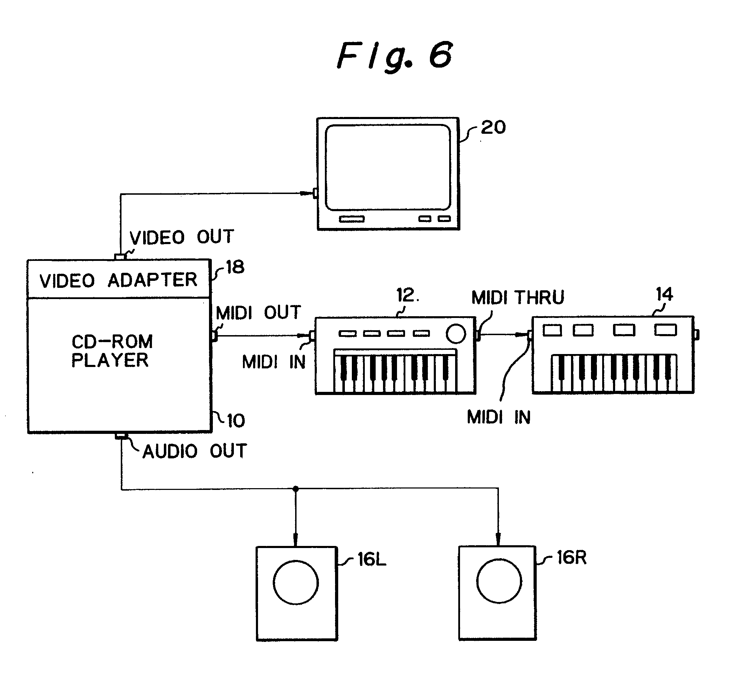

First, a reference will be made to Fig. 6 for describing an automatic playback system implemented with a CD-ROM player embodying the present invention. As shown, the CD-ROM player, generally 10, has a MIDI output terminal MIDI OUT which is connected to a MIDI input terminal MIDI IN of a first electronic musical instrument such as a synthesizer 12. The MIDI output MIDI OUT of the player 10 is also connected to a MIDI input terminal MIDI IN of a second electronic musical instrument such as an electronic organ 14. The CD-ROM player 10 further has an audio output terminal AUDIO OUT and a video output terminal VIDEO OUT. The audio output terminal AUDIO OUT is connected to the input terminals of loudspeakers 16L and 16R each having an amplifier therein. The video output terminal VIDEO OUT is connected to the input terminal of a CRT display 20 via an exclusive adapter 18 for pictures.

As the user of the CD-ROM system loads the CD-ROM player 10 with a CD-ROM of the illustrative embodiment and then presses a playback switch, the player 10 reproduces, among a great number of media data stored in the CD-ROM, a particular sequence of media data. This sequence of media data is outputted via the electronic equipments 12 and 14, loudspeakers 16L and 16R, or the display 20 as a musical performance, voice, or picture.

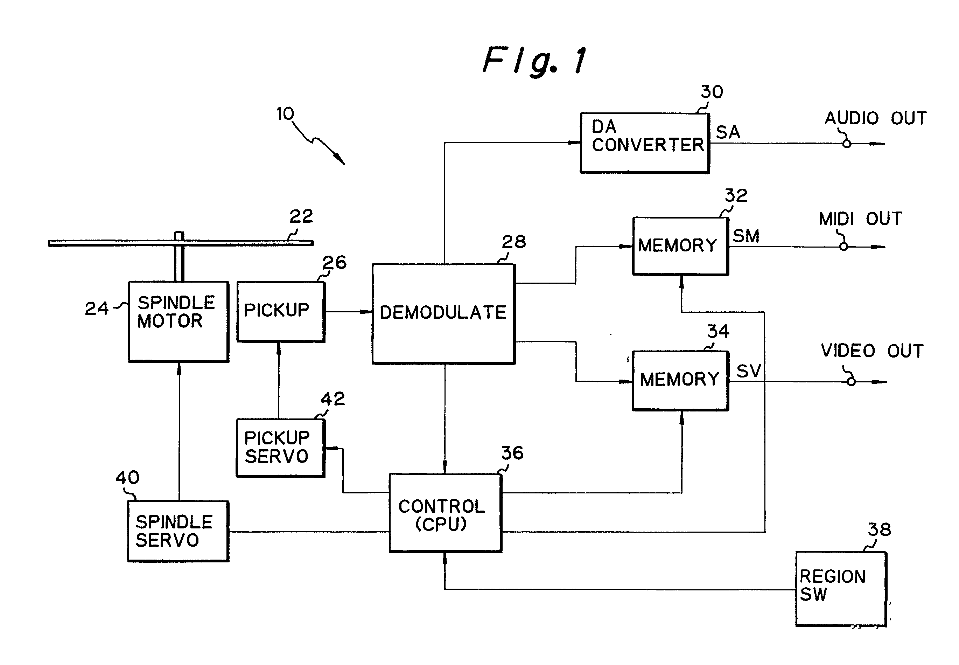

Referring to Fig. 1, essential part of the CD-ROM player 10 is shown. A CD-ROM 22 is loaded on the player 10 and driven in a rotary motion by a spindle motor 24 by a constant linear velocity (CLV) system. An optical pickup 26 optically reads data stored in the reflective layer of the CD-ROM 22 in the form of pits and transforms them into an electric signal. The electric signal is applied to a demodulating section 28. The demodulating section 28 demodulates the electric signal by predetermined digital processing while distinguishing audio data, video data, MIDI data, and control data from one another. The resulted digital audio signal, digial MIDI signal, digial video signal and digital control data are transferred from the demodulating section 28 to a digital-to-analog (DA) converter 30, a memory 32, a memory 34, and a control section 36, respectively.

An analog signal SA produced by the DA converter 30 is routed through the audio output terminal AUDIO OUT to the loudspeakers 16L and 16R. The MIDI signal SMIDI written to the memory 32 is read out by a clock rate at any desired time and fed to the musical instruments 12 and 14 via the MIDI output terminal MIDI OUT. Further, the video signal SVIDEO written to the memory 34 is read out at a predetermined clock rate at any desired time and fed to the adapter 18 via the video output terminal VIDEO OUT. The controller 36 is implemented as a microcomputer and controls, in response to the control data from the demodulating section 28, the various sections of the player 10 according to an application which is store in the CD-ROM 22 so as to reproduce the media data. For example, the controller 36 controls the rotation speed of the spindle motor 24 via a spindle servo mechanism 40 and controls the focusing, tracking, positioning and so on of the pickup 26 via a pickup servo mechanism. Further, the controller 36 controls the write-in and read-out of data from the memories 32 and 34.

In the illustrative embodiment, a playback sequence identification (ID) code is entered on a region switch 38. This ID code is fed from the region switch 38 to the controller 36. The region switch 38 is implemented by as a dip switch, for example, and may be mounted on the inner periphery or the back of the player casing. Assuming that the ID code to be entered on the switch 38 has two bits, then it can represent any one of four difference values, i.e., "00", "01", "10" and "11".

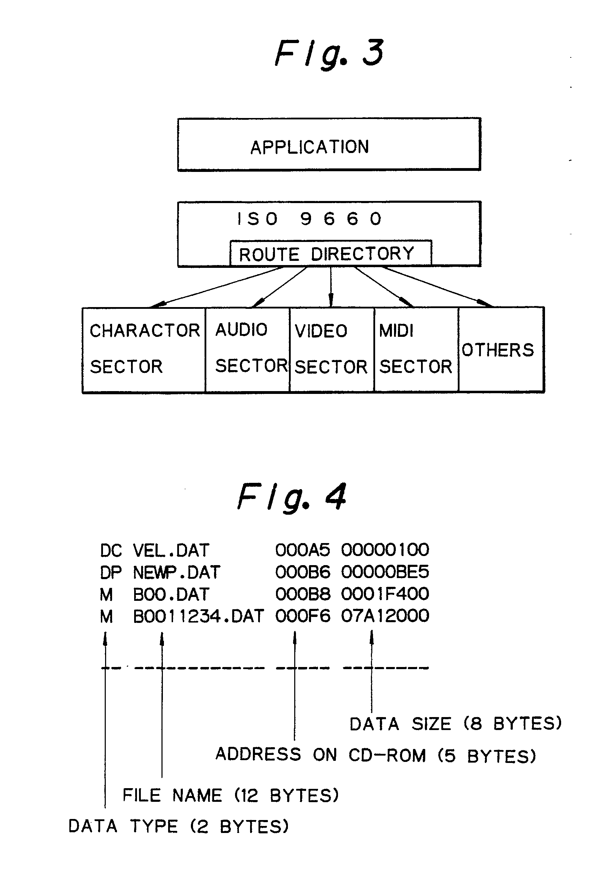

The CD-ROM 22 stores various kinds of media data such as video data, audio data and MIDI data in a predetermined format. Such media data each is reproduced in a volume file format of given standards, e.g. the international standards ISO 9660. As shown in Fig. 3, a volume file layer (ISO 9660) connects an application layer and a physical layer to each other. The physical layer has various sectors which are selectively accessible from a route directory included in ISO 9660. In this embodiment, the positions where the individual media data are recorded are also supervised by the route directory in a particular format shown in Fig. 4. Specifically, Fig. 4 show part of the MIDI data. In the figure, data types DC, DP, DG, M, DG and AP represent respectively velocity data or similar constant data, program data, MIDI data, video data, and data for automatic musial performance. Regarding the first file name VEL.DATA (velocity data), for example, the position "000A5" on the CD-ROM is representative of a 0', 2.15" sector while the data size "00000100" is representative of 256 bytes. In the CD-ROM, each recording position or address is presented in the from of "O min, O sec, O sector (block)".

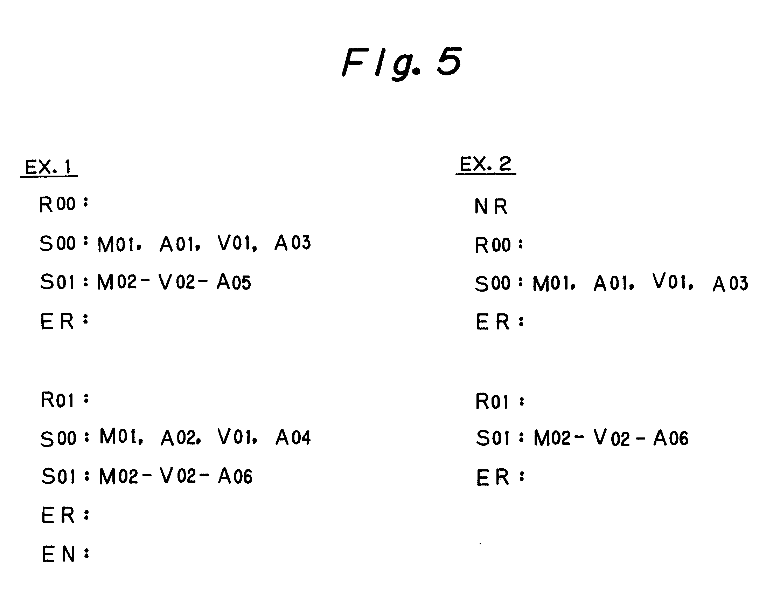

Further, in the embodiment, a plurality of playback sequences and codes each identifying respective one of the playback sequences are described in the CD-ROM 22 as a sequence file. Specific formats in which such sequences and ID codes may be described are shown in Fig. 5. The position where this sequence file is recorded is also supervised by the route directory of ISO 9660 in a format similar to the format shown in Fig. 4. In Fig. 5, codes R00 and R01 each identifies a particular playback procedure. Codes S00 and S01 each is representative of a playback sequence among groups. Codes M01 and M02 each is representative of the titles of particular MIDI data. Codes A01, A03, A05, A02, A04 and A06 each is representative of the title of particular audio data. Codes V01 and V02 each is representative of the title of particular video data. A code ER is indicative of the end a particular playback sequence. Further, a code EN is representative of the end of the entire sequence file. The CD-ROM 22 stores the media data listed in the sequence file in predetermined blocks or sectors thereof while classifying them by kinds (video, audio and MIDI). The codes assigned to the respective media data are described between each of the playback sequence ID codes R00 and R01 and the playback sequence end code ER in playback order.

Specifically, in [Example 1] shown in Fig. 5, the file describes that the media data M01, A01, V01 and A03 on the first line S00 should be sequentially reproduced first, and then the media data M02, V02 and A05 on the second line S01 should be reproduced at the same time. The hyphen (-) on the second line indicates that the hyphnated media data should be reproduced at the same time. In [Example 1], the audio data A01, A02 and A05 belonging to the first playback sequence R00 and the audio data A01, A04 and A06 belonging to the second playback sequence R01 are assumed to be commentaries in Japanese and English, respectively. Regarding the other media data M01, V01, M02 and V02, the first and second playback sequences R00 and R01 are identical. When the CD-ROM 22 is played back by the player 10, the loudspeakers 16L and 16R will output the commentary in Japanese when the first playback sequence R00 is selected or the commentary in English when the second playback sequence R01 is selected. The commentary, whether it be in Japanese or in English, is accompanied by a picture appearing on the display 20 and music being played by the instruments 12 and 14.

Which of the playback sequences should be selected in the automatic playback mode of the player 10 is determined by a value or code set on the region switch 38. Four different values or codes "00", "01", "10" and "11" which may be set on the region switch 38 correspond respectively to four different playback sequence ID codes R00, R01, R10 and R11 which may be described in the sequence file. Assume that the code "00" is set on the region switch 38. Then, in [Example 1], the first playback sequence R00 is selected with the result that the media data M01, A01, V01, A03 and (M01-V02-A05) are automatically reproduced in this sequence and accompanied by the audio data A01, A03 and A05, i.e., the commentary in Japanese. When the code "01" is set on the region switch 38, the second playback sequence R01 is selected to reproduce the media data M01, M02, V01, A04 and (M02-V02-A06) in this order automatically and to reproduce the audio data A02, A04 and A06, i.e., the commentary in English.

In Fig. 5, [Example 2] shows a specific sequence file which will be selected when the above-described automatic playback is not desired. As shown, when a code NR is described at the head of the sequence file, the automatic playback is not executed, i.e., a sequence of media data is reproduced by a particular sequence based on a program set by the user. Of course, it is possible to selectively execute the playback sequence R00 or R01 by the non-automatic operation.

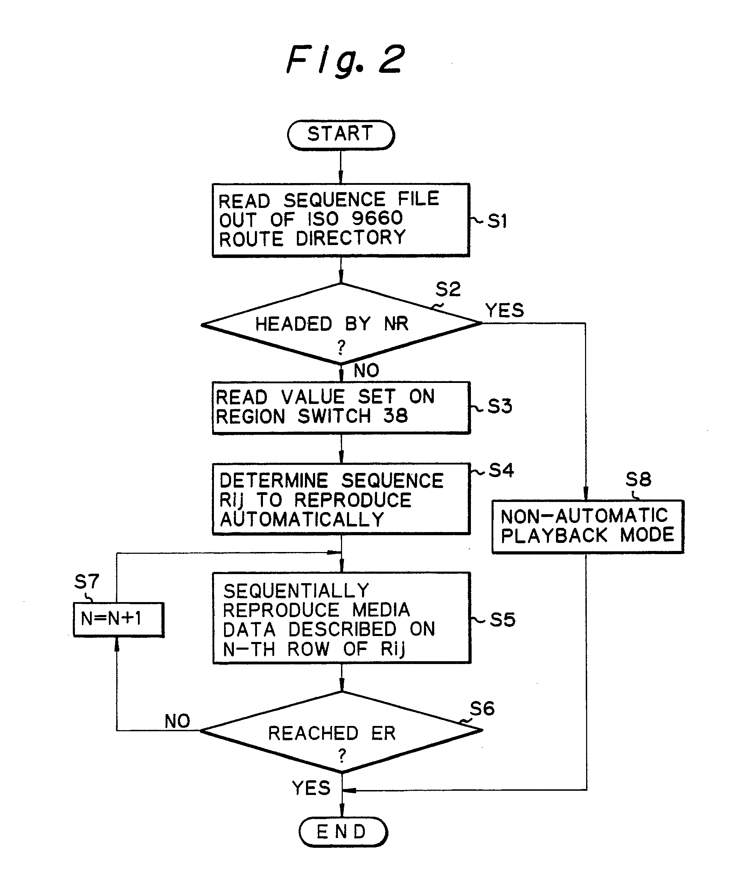

Referring to Fig. 2, a specific operation of the controller 36 for executing automatic playback is shown. As shown, when the playback switch of the player 10 is turned on, the CPU built in the controller 36 initializes the player 10 by predetermined processing and then reads the sequence file such as one shown in Fig. 5 out of the route directory of ISO 9660 (step S1). Then, the CPU determines whether or not the sequence file is headed by the code NR (S2) and, if it is not headed by the code NR, starts on automatic playback mode processing. In this processing, the CPU reads a value or code "ij" set on the region switch 38 (S3) and then determines a particular playback sequence designated by a playback sequence ID code Rij corresponding to the code "ij" (S4). Subsequently, the CPU sequentially reads a sequence of media data (M01, A01, V01, A03, (M02-V02-A05), [Example 1]) out of the CD-ROM 22, the first line S00 being first, while feeding them to the various external units 12 through 20 (S6, S7, S5 and S6). At this instance, the CPU determines the position where the desired media data are recorded by accessing the route directory on the basis of the titles of the media data described in the sequence file, and then moves the pickup 26 to the determined position via the pickup servo mechanism 42. To reproduce the MIDI data M02, video data V02 and audio data A06 simultaneously according to the sequence S01 on the second line of [Example 1], the CPU reads the MIDI data M02 and then the video data V02 out of the CD-ROM 22 and stores them in the memories 32 and 34, respectively, and then reads them out of the memory 32 and 34 in synchronism with the audio data A06 which it also reads out of the CD-ROM 22 and outputs. As a result, the loudspeakers 16L and 16R produce voice while, at the same time, the display 20 displays a picture and the instruments 12 and 14 play music. Such automatic display ends when the end ER of the playback sequence is reached (S6). When the answer of the step S2 is NO, meaning that the code CR heads the sequence file, the CPU plays back the CR-ROM 22 in the non-automatic playback mode. (S2 and S8).

As described above, in the illustrative embodiment, the CD-ROM 22 stores a plurality of playback sequences (M01, A01, V01, A03), (M02-V02-A05) and so on and codes R00, R01 and so on for identifying them, in addition to a number of media data. A playback sequence ID code desired by the manufacture or vendor of the CD-ROM 22 is set on the region switch 38 provided on the player 10. On the turn-on of the playback switch of the player 10, the controller 36 selects a particular playback sequence matching the code set on the region switch 38 and then controls the various sections of the player 10 to reproduce a sequence of media data according to the playback sequence. Therefore, with the CD-ROM 22, it is possible to reproduce given application software in Japanese in Japan and in English in U.S.A, for example, for the representation of a new products or similar purpose.

While the embodiment has concentrated on Japanese and English as languages to be stored in a CD-ROM, they may be replaced with or stored together with any other languages such as German, French and Spanish only if particular playback sequences each being assigned to respective one of the languages are described in a sequence file. Then, in each country where one of such different languages is spoken, a playback sequence ID code matching the language will be set on the region switch of a player.

Of course, the present invention is similarly applicable to an exclusive CD-ROM player for MIDI. In this case, audio data may be recorded in a CD-ROM in some different languages together with corresponding playback sequences in accordance with the present invention, in addition to MIDI data. Then, it is possible to reproduce desired one of the auido data recorded in different languages and particular MIDI data representative of a desired program.

The present invention contributes a great deal to the playback of a CD-ROM in multiple languages, as stated above. It should be noted, however, that the present invention is practicable not only with CD-ROM's but also with photomagnetic disks and other storing media available today and allows one of a plurality of predetermined playback sequences which matches the time, place and occasion to be automatically selected so as to produce a sequence of media data.

The present invention having the above-described steps or construction achieves various unprecedented advantages, as enumerated below.

(1) Media data such as picture, voice and music and a plurality of playback sequences are recorded in a storing medium, while a code identifying desired one of the playback sequences is set on a player. A playback sequence matching the code is read out of the storing medium, and a string of media data is sequentially read out of the storing medium and reproduced according to the the playback sequence. Hence, on the turn of a playback switch, a string of media data is reproduced in a particular playback sequence automatically selected, promoting simple and rapid user-oriented operations.

(2) Audio data may be recorded in the storing medium in some different languages together with playback sequences each being assigned to respective one of the languages. Then, if a suitable playback sequence ID code is entered, a playback sequence assigned to a desired language will be executed. This allows a single CD-ROM to be played back in any country in the native language.

(3) Further, at least a plurality of different audio data each corresponding to a particular language, music data for controlling electronic equipment which produces musical notes, and data representative of a plurality of playback sequences for reproducing such data may be stored in an optical recording medium to be played back by a MIDI player. Then, when a code designating particular audio data or a particular playback sequence is entered on the MIDI player, the player will play back the recording medium by use of the video data or the playback sequence corresponding to the entered code. It is possible, therefore, to reproduce voice in a desired language or to reproduce a string of voice and music data in a desired playback sequence automatically.

Various modifications will become possible for those skilled in the art after receiving the teachings of the present disclosure without departing from the scope thereof.

**Claims**

1. A method of reading a string of media data out of a recording medium storing media data by a player in a predetermined playback sequence and reproducing said string of media data automatically, said method comprising the steps of:

   (a) recording a plurality of playback sequences in said recording medium;
   (b) setting a code identifying particular one of said playback sequences on said player; and
   (c) reading said particular playback sequence out of said recording medium and sequentially reading a string of media data out of said recording medium according to said particular playback sequence and reproducing said string of media data.

2. A method as claimed in claim 1, wherein said recording medium comprises a CD-ROM.

3. A method as claimed in claim 1 or 2, wherein the media data comprises video data, audio data, and music data.

4. An apparatus for reading out of a recording medium storing media information and a plurality of playback sequences a string of media data in a predetermined playback sequence and reproducing said string of media data automatically, said apparatus comprising:

   code setting means for setting a code identifying a particular playback sequence on said apparatus; and
   playback control means for reading said particular playback sequence out of said storing medium and sequentially reading a string of media data out of said storing medium and reproducing said string of media data in said particular playback sequence.

5. An apparatus as claimed in claim 4, wherein said recording medium comprises a CD-ROM.

6. An apparatus as claimed in claim 4 or 5, wherein said media data comprises video data, audio data, and music data.

7. A method of playing back automatically an optical storing medium storing a plurality of audio data each corresponding to a particular language, music data for controlling an electronic musical instrument which produces musical notes, and data representative of a plurality of playback sequences for reproducing said data, said method comprising:

   (a) inputting a code designating data representative of said audio data or one of said playback sequences on a MIDI player for playing back said optical storing medium; and
   (b) causing said MIDI player to play back said optical storing medium by using said data representative of said audio data or said playback sequence corresponding said code.

8. An apparatus for playing back an optical storing medium storing a plurality of audio data each corresponding to a particular language, music data for controlling electronic equipment which produces musical notes, and data representative of a plurality of playback sequences for reproducing said data, and causing said electronic equipment to play music automatically, said apparatus comprising:

   designating means for designating data representative of said plurality of audio data or said plurality of playback sequences; and
   reproducing means for reproducing, on the basis of said data designated by said designating means, given audio data or at least said audio data and said music data in a given playback sequence out of said optical recording medium.

# Fig. 1

SPINDLE MOTOR 24

PICKUP 26

PICKUP SERVO 42

SPINDLE SERVO 40

DEMODULATE 28

CONTROL (CPU) 36

DA CONVERTER 30 — SA — AUDIO OUT

MEMORY 32 — SM — MIDI OUT

MEMORY 34 — SV — VIDEO OUT

REGION SW 38

22

10

EP 0 459 157 A2

# F I g. 2

```
                    ( START )
                        |
        +-------------------------------+
        | READ SEQUENCE FILE            |
        | OUT OF ISO 9660               |~ S1
        | ROUTE DIRECTORY               |
        +-------------------------------+
                        |
                       S2
                    /      \          YES
             < HEADED BY NR >  -------------+
                    \    ?  /               |
                     \    /                 |
                      NO                    |
        +-------------------------------+   |
        | READ VALUE SET ON             |~ S3
        | REGION SWITCH 38              |   |
        +-------------------------------+   |
                        |                   |
        +-------------------------------+   |
        | DETERMINE SEQUENCE            |~ S4
        | Rij TO REPRODUCE              |   |        S8
        | AUTOMATICALLY                 |   |
        +-------------------------------+   +----+-------------------+
                        |                        | NON-AUTOMATIC     |
     +-------+          |                        | PLAYBACK MODE     |
     |       |          |                        +-------------------+
     |  S7   |   +-------------------------------+           |
     | N=N+1 |   | SEQUENTIALLY                  |           |
     +-------+   | REPRODUCE MEDIA               |~ S5       |
         |       | DATA DESCRIBED ON             |           |
         |       | N-TH ROW OF Rij               |           |
         |       +-------------------------------+           |
         |                    |                              |
         |                   S6                              |
         |    NO          /      \                           |
         +-------------< REACHED ER >                        |
                         \    ?   /                          |
                          \      /                           |
                           YES                               |
                            +-------------------------------- +
                            |
                        ( E N D )
```

# Fig. 3

```
                    ┌─────────────────────────────────────┐
                    │            APPLICATION               │
                    └─────────────────────────────────────┘


                    ┌─────────────────────────────────────┐
                    │          I S O   9 6 6 0             │
                    │    ┌───────────────────────────┐     │
                    │    │    ROUTE  DIRECTORY        │     │
                    └────┴───────────────────────────┴─────┘
```

| CHARACTOR SECTOR | AUDIO SECTOR | VIDEO SECTOR | MIDI SECTOR | OTHERS |
|---|---|---|---|---|

# Fig. 4

```
DC  VEL.DAT         000A5  00000100
DP  NEWP.DAT        000B6  00000BE5
M   BOO.DAT         000B8  0001F400
M   BOO11234.DAT    000F6  07A12000
```

DATA SIZE (8 BYTES)

ADDRESS ON CD-ROM (5 BYTES)

FILE NAME (12 BYTES)

DATA TYPE (2 BYTES)

# Fig. 5

| EX. 1 | EX. 2 |
|---|---|
| R00: | NR |
| S00: M01, A01, V01, A03 | R00: |
| S01: M02- V02- A05 | S00: M01, A01, V01, A03 |
| ER: | ER: |
| | |
| R01: | R01: |
| S00: M01, A02, V01, A04 | S01: M02- V02- A06 |
| S01: M02- V02- A06 | ER: |
| ER: | |
| EN: | |

EP 0 459 157 A2

Fig. 6

VIDEO ADAPTER — 18

VIDEO OUT

CD-ROM PLAYER — 10

MIDI OUT

MIDI IN

AUDIO OUT

20

12.

MIDI OUT

MIDI IN

14

MIDI THRU

MIDI IN

16L

16R